(19) **Europäisches Patentamt**
**European Patent Office**
**Office européen des brevets**

(11) **EP 2 927 486 B1**

(12) **EUROPEAN PATENT SPECIFICATION**

(45) Date of publication and mention
of the grant of the patent:
**23.05.2018 Bulletin 2018/21**

(51) Int Cl.:
*F03D 17/00* *(2016.01)*   *F03D 7/02* *(2006.01)*
*F03D 7/04* *(2006.01)*

(21) Application number: **14382123.9**

(22) Date of filing: **31.03.2014**

(54) **Fatigue in wind turbines**

Ermüdung in Windturbinen

Fatigue dans des éoliennes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.10.2015 Bulletin 2015/41**

(73) Proprietor: **Alstom Renovables España, S.L.**
**08005 Barcelona (ES)**

(72) Inventors:
• **Carcangiu, Carlo Enrico**
**08018 Barcelona (ES)**
• **Pineda Amo, Isaac**
**22395 Hamburg (DE)**

(74) Representative: **ZBM Patents - Zea, Barlocci & Markvardsen**
**Plaza Catalunya, 1**
**08002 Barcelona (ES)**

(56) References cited:
**EP-A2- 2 108 830**        **WO-A1-2011/035977**
**US-A1- 2011 018 271**

• **HAMMERUM K ET AL: "A fatigue approach to wind turbine control", JOURNAL OF PHYSICS: CONFERENCE SERIES, INSTITUTE OF PHYSICS PUBLISHING, BRISTOL, GB, vol. 75, no. 1, 1 July 2007 (2007-07-01), page 12081, XP020125154, ISSN: 1742-6596, DOI: 10.1088/1742-6596/75/1/012081**
• **PATRICK RAGAN ET AL: "Comparing Estimates of Wind Turbine Fatigue Loads using Time-Domain and Spectral Methods", WIND ENGINEERING, vol. 31, no. 2, 1 March 2007 (2007-03-01), pages 83-99, XP055138180, ISSN: 0309-524X, DOI: 10.1260/030952407781494494**

## Description

The present disclosure relates to methods for operating a wind turbine, and more particularly to methods for operating a wind turbine in view of fatigue damage in one or more wind turbine components. The present disclosure further relates to wind turbines suitable for carrying out such methods.

## BACKGROUND

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox.

A variable speed wind turbine may typically be controlled by varying the generator torque and the pitch angle of the blades. As a result, aerodynamic torque, rotor speed and electrical power generated will vary.

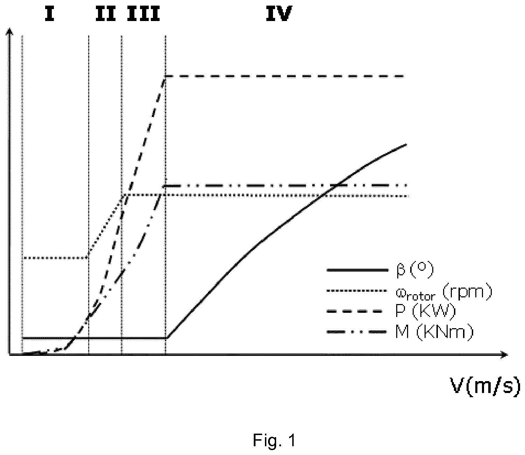

A common prior art control strategy of a variable speed wind turbine may be described with reference to figure 1a. In figure 1a, the operation of a typical variable speed wind turbine is illustrated in terms of the pitch angle ($\beta$), the electrical power generated (P), the generator torque (M) and the rotational velocity of the rotor ($\omega$), as a function of the wind speed.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective may generally be to maximize power output while maintaining the pitch angle of the blades so as to capture maximum energy. In general, in the second operational range, the pitch angle of the blades may be substantially constant, although the optimal blade setting may theoretically depend on the instantaneous wind speed. In order to achieve this objective, the generator torque and rotor speed may be varied so as to keep the tip speed ratio $\lambda$ (tangential velocity of the tip of the rotor blades divided by the prevailing wind speed) constant so as to maximize the power coefficient $C_p$.

In order to maximize power output and keep $C_p$ constant at its maximum value, the rotor torque may be set in accordance with the following equation:

$$T = k.\omega^2 \, ,$$

wherein
k is a constant, and $\omega$ is the rotational speed of the generator. In a direct drive wind turbine, the generator speed substantially equals the rotor speed. In a wind turbine comprising a gearbox, normally, a substantially constant ratio exists between the rotor speed and the generator speed.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which in some cases may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

The before described operation may be translated into a so-called power curve, such as the one shown in figure 1. Such a power curve may reflect the optimum operation of the wind turbine under steady-state conditions and under conditions of uniform wind speed over the rotor swept area (the area swept by the blades of the wind turbine).

Wind turbines and wind turbine components may be designed having a design life time (e.g. 20 years) in mind. This means that a wind turbine is expected to be decommissioned after 20 years of operation. In an ideal scenario, all of the wind turbine components or a large number of the wind turbine components reach the end of their individual life time at substantially the same moment, i.e. at the end of the wind turbine's life time. In this case, none of the wind turbine components is overdimensioned. Each of the components is dimensioned correctly, thus reducing weight and cost of the wind turbine.

However, in reality a wind turbine will not always perform exactly according to expectations, as e.g. the wind conditions during actual operation may be different from the expected wind conditions. This may lead to the wind turbine not reaching its design life and requiring early decommissioning of a wind turbine.

In order to avoid this problem, fatigue damage could be monitored. One known method for determining fatigue damage is to continuously measure loads in the wind turbine. Such measured loads may then be subjected to a rainflow cycle counting method, which is based on determining and counting peak loads. By determining and counting the peak loads, the loads may be decomposed into various numbers of cycles of different magnitudes. Using e.g. the Palmgren-Miner rule, accumulated fatigue damage of the wind turbine may be calculated. If this were implemented in a wind turbine, theoretically it would be possible to determine the accumulated fatigue damage in the wind turbine components. One main problem with a rainflow counting method is that it is very complicated, and would require an enormous computing power to implement in real-time in a wind turbine. This would thus be too expensive. An alternative method based on spectral properties of the stress history of wind turbine components is shown in the article "A fatigue approach to wind turbine control" by Hammerun et al, Journal of Physics: Conference series, IOP Publishing, Bristol, GB, vol. 75, no 1, July 2007. The present disclosure relates to various methods and systems for avoiding or at least partly reducing one or more of the aforementioned problems.

SUMMARY

In a first aspect, a method of operating a wind turbine is provided, the wind turbine comprising one or more sensors for determining loads in selected wind turbine components. The method comprises measuring loads in the selected wind turbine components during a measuring period under a first wind condition, calculating a real power spectral density of one or more selected loads for each of the selected wind turbine components during the measuring period, obtaining a reference power spectral density for the selected loads for each of the selected wind turbine components under a wind condition that is comparable to the first wind condition, and determining accumulated fatigue damage in time equivalent loads for each of the selected wind turbine components based on the real power spectral density and the reference power spectral density. Then, an operational change can be performed if one or more of the selected wind turbine components have accumulated fatigue damage outside acceptable limits.

Optionally, have more or less accumulated fatigue damage than expected, i.e. more or less fatigue damage than what may be expected on the basis of the time of operation of the wind turbine.

In accordance with this aspect, fatigue damage is calculated in the frequency domain. Such a fatigue damage calculation may generally be less accurate than methods based on rainflow counting. However, the fatigue calculation may be improved by comparing with a reference, in this case, a reference for the same component under comparable conditions. Additionally, such a frequency calculation may be performed in real-time during operation. It thus makes it possible to realistically modify operation of a wind turbine.

Optionally, verifying for each of the selected wind turbine components is within acceptable limits may comprise verifying whether the accumulated fatigue damage in time equivalent loads substantially corresponds to the time that the wind turbine has been in operation. That is, the acceptable limits may be based on the time the wind turbine has been in operation.

If for example, one or more components have suffered the equivalent of 5 years of loads, whereas the wind turbine has only been operating 4 years, an operational strategy could be changed accordingly, e.g. a thrust limit could be imposed, which may lead to a reduction of the energy yield of a wind turbine but could theoretically allow the wind turbine to reach its design life time. The acceptable limits in such a case could be set e.g. between 3 and 4,5 years of loads (after 4 years of operation). Having a wind turbine component that has suffered less than expected is less of a problem than having a wind turbine component that has suffered more than expected.

In another example, an operational change could also be made if the wind turbine has suffered less fatigue damage than expected. In this case, an operational change could be made that attempts to yield more energy, at the expense of higher loads.

Reference PSDs may be obtained e.g. from simulations for different wind turbine components and/or for different wind conditions. Alternatively, PSDs may be obtained at the very beginning of the operational life of a wind turbine (e.g. during certification and/or commissioning). In such a situation it may be assumed that none of the wind turbine components has suffered any fatigue damage yet. The PSDs that may be obtained from measurements from sensors in such a situation may be used as reference PSDs.

In some examples, such a method may further comprise verifying if one or more of the selected wind turbine components has more accumulated fatigue damage in the time equivalent loads than another of the wind turbine components, and performing one or more operational changes based on this verification. In accordance with this aspect, it is taken into account that some wind turbine components may have suffered more fatigue damage than others. This may be caused e.g. by the wind turbine components behaving (slightly) differently than foreseen. Such information only becomes available during the actual operation. In such a case, an operational change may be made which reduces loads on the component or components that have suffered more. It may thus be achieved that more of the wind turbine components reach the end of their life time at substantially the same moment.

To this end, accumulated fatigue damage suffered by each of the selected wind turbine components may be expressed as time equivalent loads, e.g. as a percentage of the design life equivalent loads.

In some examples, the method may further comprise measuring an energy yield during a period of time, and comparing the energy yield during the period of time with an expected energy yield. Operational changes to be made may then take this information into account. In these examples, operational changes may thus be based on one or more of the following: comparison of operational time of the turbine with accumulated fatigue damage, comparison of accumulated fatigue damage between components, and comparison of measured yield with expected yield.

In some circumstances it may be found that the selected wind turbine components are behaving similarly, i.e. in terms of their design life time, they have suffered the same equivalent loads. From this point of view, there would be no need to adapt an operational strategy to favour one component over another. However, if it is found at the same time that the wind turbine is not yielding the energy it was expected to yield, then the operation of the wind turbine may be changed so as to increase energy yield. At the same time, fatigue damage may be increased but this may not necessarily be critical in the sketched circumstances.

In some examples, the measuring period may be 1 minute - 5 minutes, optionally 1 minute - 3 minutes, and optionally approximately 100 seconds. It has been found that such time windows are sufficiently long to capture enough information to make the calculated of accumulated fatigue damage sufficiently reliable. At the same, such time windows are short enough to be able to perform the calculations on-line, i.e. during operation.

In some examples, the method may further comprise following a typical power curve for a variable speed wind turbine. Making an operational change in view of accumulated fatigue damage and/or energy yield may include e.g. activation or deactivation of individual pitch control, and/or activation or deactivation of a set point reduction in the supranominal zone of operation, and/or activation or deactivation of a pitch control for reducing tower loads, and/or modifying a parameter setting of the rotor speed control (e.g. main PID gains), and/or activation or deactivation of a power limitation. Both a power limitation and a set point reduction affect the power curve. Further operational changes are possible.

In a further aspect, the present disclosure provides a wind turbine comprising a tower, a rotor comprising a rotor hub and a plurality of blades, one or more pitch systems for rotating the blades around their longitudinal axes, a generator, and a control system. The control system is configured to carry out any of the examples of the methods herein described.

BRIEF DESCRIPTION OF THE DRAWINGS

Non-limiting examples of the present disclosure will be described in the following, with reference to the appended drawings, in which:

Figure 1 illustrates a typical power curve of a wind turbine;

Figure 2 schematically illustrates an example of a method of operating a wind turbine; and

Figures 3a and 3b schematically illustrate an example of a wind turbine control system including a fatigue control module, and an example of such a fatigue control module respectively.

DETAILED DESCRIPTION

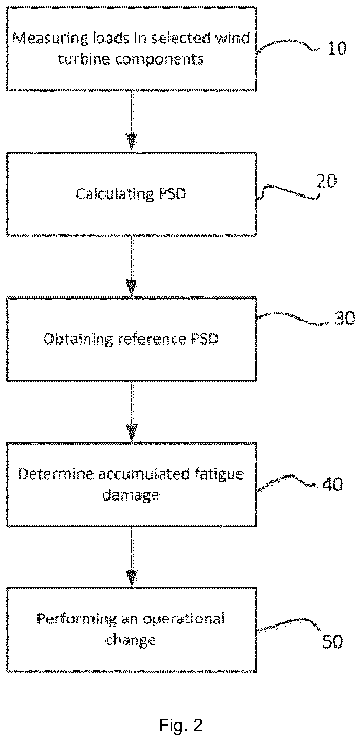

The power curve of figure 1 has been discussed before. Figure 2 schematically illustrates an example of a method of operating a wind turbine. The wind turbine of this example may include at least one or more sensors for measuring loads in selected wind turbine components. Such sensors may include e.g. strain gauges and/or accelerometers. The selected wind turbine components may be wind turbine components that are considered critical for the wind turbine's performance. In an example, the selected wind turbine components may include e.g. the rotor blades, the hub, the drive train (as a whole, or components thereof), pitch systems, and the tower. The sensors for measuring loads indicative of the loads in these components could be mounted directly on or in the components.

At block 10, selected loads in selected wind turbine components may be determined. For a rotor blade, e.g. a flapwise and/or an edgewise bending moment may be determined from these measurements. For the tower, a selected load may be e.g. a fore-aft bending moment at the bottom of the tower. Alternatively, a side-to-side bending moment could be used. For a drive train, a bending load in a rotor shaft or at a location in a gearbox could be used. For pitch systems, one or more loads of a pitch motor could be used. A time-series of data for the selected loads in the selected components may thus be obtained.

At block 20, such a time-series of data may be converted in a power spectral density for each of the selected wind turbine components. At block 30, a reference power spectral density for the selected loads may be obtained. Such a reference power spectral density of the selected loads may be obtained e.g. from a memory of a wind turbine control system. The reference power spectral density should be of the same selected loads under comparable wind conditions. Such wind conditions may be characterised by e.g. an average wind condition and an indication of the turbulence.

At block 40, accumulated fatigue damage for each of the wind turbine components may be determined based on the real PSD and the reference PSD. Such a fatigue damage may be calculated using e.g. Lalanne's method (see e.g. C. Lalanne, Mechanical vibration and shock, 2002, Taylor and Francis) or e.g Dirlik's method (T. Dirlik, Application of computers in fatigue analysis, 1985, University of Warwick) or variations thereof.

In order to compare the accumulated fatigue damage of one wind turbine component with another wind turbine component or with its own expected damage, the accumulated fatigue damage may be expressed in time equivalent loads, i.e. time units that indicate the loads that a component has suffered. One option is to express the accumulated fatigue damage for each of the components as a percentage of a life time of that component.

At block 50, an operational change may be performed if one or more of the selected wind turbine components have more or less fatigue damage than expected. If components have suffered more fatigue damage than expected, an operation change could be made to reflect this. In an example, a verification may be made whether one or more of the selected components have suffered more accumulated fatigue damage than another component. The operational change may be chosen so as to reduce loads on the components that have suffered more than others.

But also if components have suffered less fatigue damage than expected, operational changes could be made that aim at increasing the energy yield, at the expense of more loads.

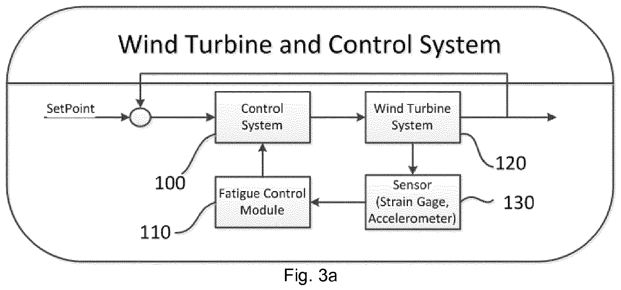

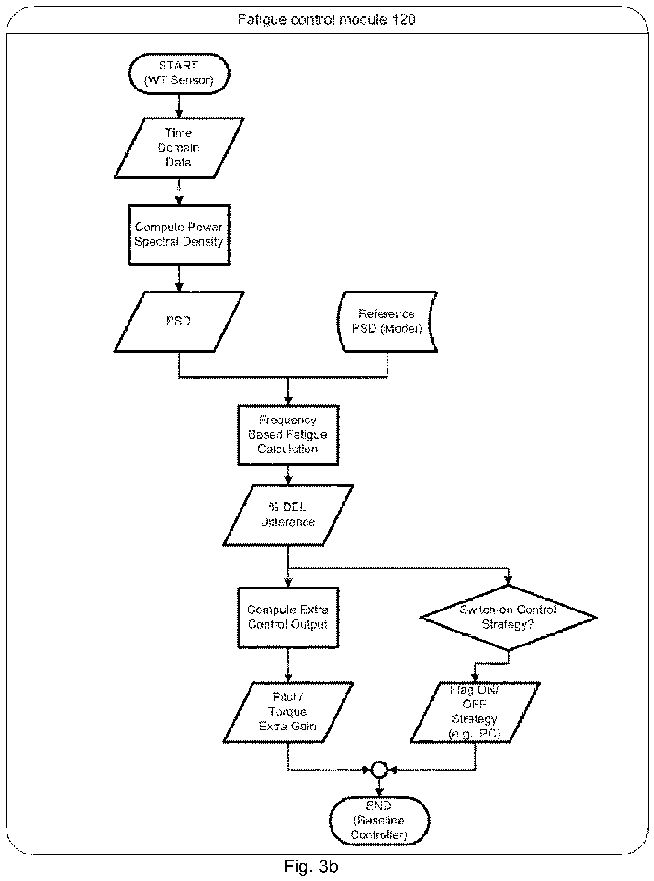

Figures 3a and 3b schematically illustrate an example of a wind turbine control system and a fatigue control module, and an example of such a fatigue control module respectively.

In figure 3a, a wind turbine control system may implement a "classic" control for a variable speed wind turbine, i.e. following a power curve that includes different operational ranges with different operational objectives. For example, in the supra-nominal zone of operation, an objective is to maintain the (generator) rotor speed substantially constant by maintaining the aerodynamic torque on the rotor substantially constant by adapting a pitch angle. In a second operational range, an objective is to maximize aerodynamic torque by adapting the generator torque to a (generator) rotor speed so as to maintain an optimum tip speed ratio.

The control system 100 may thus control various wind turbine systems 120 (e.g. pitch drive systems, converters of the generator) to reach a setpoint. A feedback loop may be incorporated to constantly measure whether the wind turbine is operating at its setpoint and adapt the control if not.

One of the inputs of the control system may be a fatigue control module 110. In figure 3a, the fatigue control module 110 is depicted as separate from the control system 100, but may form part of it. The fatigue control module may adapt an objective of a control system or a setting of the control system in view of accumulated fatigue damage in one or more wind turbine components.

Such fatigue damage may be determined from measurements from sensors 130 mounted in or on wind turbine systems / components.

Schematically illustrated in figure 3b is an example of a fatigue control module 110. From the sensors, data of the loads in a time domain may be obtained. From such data, a real Power Spectral Density (PSD) of the corresponding load of a selected wind turbine component can be calculated.

Given the wind conditions under which the data from the sensors was obtained, a reference PSD may be obtained for similar wind conditions and for the same selected wind turbine component.

Based on the real PSD and the reference PSD, a calculation in the frequency domain can be made of the accumulated fatigue damage of the selected wind turbine component. Such accumulated fatigue damage may be expressed as damage equivalent loads and the operational time of the wind turbine (optionally as a percentage of the life time) corresponding to such loads can also be calculated.

Once the accumulated fatigue damage for several wind turbine components has been determined, in one example an additional control strategy may be switched on or off. Such an additional control strategy that does not form part of a classic control strategy of a variable speed wind turbine may be e.g. an individual pitch control based on e.g. a LIDAR. An effect of such an individual pitch control would be that a pitch system may wear out sooner. At the same time, blade loads may be reduced so that blades can last longer.

Another example of a control strategy that could be turned on or off is a set point reduction. A set point reduction strategy comprises that in the supra-nominal zone of operation, starting at a given wind speed, both rotor speed and generated power are reduced. An effect is that overall loads may be reduced but that less electrical power is generated.

Apart from activating or deactivating a control strategy, details of the already implemented strategy may be changed, such as e.g. gains in a PID control may be changed. For example, in a PID control based on error value of (generator) rotor speed may have e.g. a "soft" control with lower gains, a "hard" control with higher gains, and a "standard" control. With higher gains, the actuators are more reactive so as to maintain a setpoint. This may lead to more fatigue loads, but may lead to a higher energy production.

The result of the fatigue control module 120 may serve as input to the control system 110 as schematically illustrated in figure 3a. As a result, the operation of the wind turbine may be affected.

A further example of a method of operation of a wind turbine may be illustrated with respect to various scenarios outlined in table 1 below.

Table 1: different scenarios

| Design | | | Scenario #1 | Scenario #2 | Scenario #3 | Scenario #4 |
|---|---|---|---|---|---|---|
| *Fatigue (Remaini ng Lifetime)* | *Tower* | 100% | 90% | 100% | 75% | 105% |
| | *Blades* | 100% | 100% | 90% | 75% | 105% |
| | *Hub* | 100% | 100% | 90% | 75% | 105% |
| | *Drive Train* | 100% | 100% | 100% | 90% | 105% |
| | *Pitch* | 100% | 100% | 100% | 100% | 105% |
| *Energy* | *AEY* | 100% | 100% | 100% | 90% | 98% |

Table 1 shows for a number of selected wind turbine components, the life time (in terms of fatigue) that these components still have left as a percentage of their theoretical remaining life time for a number of imaginary scenarios. If a life time of a component is 20 years, after 5 years of operation, the theoretical remaining life time is 15 years. In Scenario 1, 90% is indicated for the tower. This means that the tower after 5 years, in terms of accumulate damage does not have 15 years left, but rather 90% of 15 years. In the same scenario, the blades, hub, drive train and pitch systems still have 100% of their expected life time left.

In table 1, the Annual Energy Yield (AEY) as a percentage of the expected annual energy yield is also indicated for a number of different scenarios.

For the design scenario, each of the wind turbine components still have 100% of their expected lifetime available, and the Annual Energy Yield equals the expected energy yield. As such, no operational change needs to be made.

In scenario 1, the tower has suffered more fatigue damage than the other selected components. The energy yield corresponds to the expected energy yield. In this scenario, in one case, a pitch strategy taking into account tower loads may be activated. That is, a pitch control may be used to reduce fore-aft oscillations in the tower, by adapting the torque on the blades appropriately (through pitching). The strategy of tower damping pitch control may thus be selectively activated in view of the accumulated fatigue damage of one or more wind turbine components, and in particular in view of a relatively high accumulated damage to the tower and less to other components.

Additionally, in scenario 1, a "soft control" of the (generator) rotor speed may be implemented. A soft control is thus a less stringent control of the speed of the rotor around a setpoint. A very stringent control of the speed may induce the aforementioned fore-aft oscillations, since the pitch system constantly acts to compensate varying wind conditions. These variations have a large effect on the thrust on the rotor blades, and thus on a fore-aft bending moment.

In scenario 2, it may be seen that the blades and the hub have suffered more fatigue damage than the other drive train components (rotor shaft, gearbox, generator), pitch systems and the tower. In response to such a situation, in one example, another control strategy may be activated: individual pitch control (IPC). Individual pitch control may be implemented in particular to compensate for uniformities within the rotor swept area, such as e.g. wind shear. By adapting the pitch angle to differing wind conditions within a single rotation of a rotor blade, blades and hub may suffer significantly less. At the same time, the energy yield of the wind turbine does not need to suffer.

Also, in this scenario, such a control strategy may be selectively activated and deactivated in view of the accumulated fatigue damage of various components. If at a later point in time, it is found that the pitch drives have accumulated more fatigue loads, whereas the blades and hub have suffered less, the IPC strategy may be deactivated.

In scenario 3, it may be seen that the tower, blades and hub have suffered significantly more fatigue damage than expected. Also the drive train components have suffered more than expected (but less than tower, hub and blades), whereas the pitch systems are performing according to expectations. In scenario 3, it may further be seen that also the electrical power production is below expectations. In these circumstances, it may be more important to reduce loads on hub, blades and tower than to gain more in electrical power production. A possible strategy that may be activated in such a case is a power limitation or de-rating, i.e. a modification of the power curve in that nominal power is reduced. This requires more pitching of the blades, so that the aerodynamic torque is further reduced for the entire supra-nominal zone of operation. The pitch systems are in the best condition of the selected wind turbine components in this scenario, so that more pitching is not a problem.

In scenario 4, all the indicated wind turbine components still have more than their expected life time left in view of the accumulated fatigue damage. However, it may be seen in this scenario that the wind turbine is not generating as much energy / electrical power as expected. An example response to such a situation may be to implement a "hard" speed control. The gains in a PID control method of the (generator) rotor speed may be increased, so that a theoretical power curve is more closely followed. This may generally lead to higher loads on the pitch drives, and on the blades and hub, but these have not suffered a lot yet so that this can be acceptable.

In all the different scenarios, the fatigue status of the selected components may be determined in real-time and the electrical power production may be taken into account to adapt the operation of the wind turbine. The adaptation of the operation may include activation or deactivation of a specific control strategy and/or may include an adaptation of the existing control strategy, i.e. a more rigid or less rigid implementation of the already existing and implemented strategy.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1.   Method of operating a wind turbine, the wind turbine comprising one or more sensors for determining loads in one or more selected wind turbine components,
the method comprising determining loads in the selected wind turbine components under a first wind condition during a measuring period,
calculating a real power spectral density of one or more selected loads for each of the selected wind turbine components during the measuring period,
obtaining a reference power spectral density for the selected loads for each of the selected wind turbine components under a wind condition that is comparable to the first wind condition,
determining accumulated fatigue damage in time equivalent loads for each of the selected wind turbine components based on the real power spectral density and the reference power spectral density,
verifying for each of the selected wind turbine components whether the accumulated fatigue damage in time equivalent loads is within acceptable limits, and
in case of negative result
performing one or more operational changes.

2.   Method according to claim 1, wherein the verifying for each of the selected wind turbine components whether the accumulated fatigue damage in time equivalent loads is within acceptable limits comprises verifying whether the accumulated fatigue damage in time equivalent loads substantially corresponds to the time that the wind turbine has been in operation.

3.   Method according to claim 1 or 2, wherein the performing one or more operational changes includes comparing the accumulated fatigue damage in the time equivalent loads of at least one of the selected wind turbine components with at least one other wind turbine component, and
performing one or more operational changes at least partly based on the comparison of the accumulated fatigue damage.

4.   Method according to any of claims 1 - 3, wherein the performing one or more operational changes includes measuring an energy yield during a period of time, and comparing the measure energy yield during the period of time with an expected energy yield, and
performing one or more operational changes at least partly based on the comparison of the measure energy yield with the expected energy yield.

5.   Method according to any of claims 1 - 4, wherein loads in the selected wind turbine components are measured substantially continuously.

6.   Method according to any of claims 1 - 5, wherein the measuring period is 1 minute - 5 minutes, optionally 1 minute - 3 minutes, and optionally approximately 100 seconds.

7.   Method according to any of claims 1 - 6, wherein the wind turbine comprises a tower, a rotor comprising a rotor hub and a plurality of blades, one or more pitch systems for rotating the blades around their longitudinal axes, a generator, and optionally a rotor shaft and a gearbox for operationally coupling the generator to the hub.

**8.** Method according to claim 7, wherein one of the selected wind turbine components is the tower, and the selected loads comprise a bending moment at a base of the tower, optionally a fore-aft bending moment at the base of the tower.

**9.** Method according to claim 7 or 8, wherein one of the selected wind turbine components is the rotor hub, and the selected loads comprise a hub bending moment.

**10.** Method according to any of claims 7 - 9, wherein one of the selected wind turbine components is a rotor blade, and the selected loads comprise a flapwise bending moment and/or an edgewise bending moment.

**11.** Method according to any of claims 7 - 10, wherein the selected wind turbine components comprise one of the pitch systems and/or the rotor shaft and/or the generator.

**12.** Method according to any of claims 1 - 11, wherein the operational changes include one or more of the following:

   - activation or deactivation of individual pitch control
   - activation or deactivation of a pitch control for reducing tower loads
   - activation or deactivation of a power limitation.

**13.** Method according to any of claims 1 - 12, further comprising
following a power curve describing an operation of the wind turbine as a function of a wind speed,
the power curve comprising a sub-nominal zone of operation for wind speeds below a nominal wind speed and a supra-nominal zone of operation for wind speeds above the nominal wind speed, and wherein
in the sub-nominal zone of operation, the blade pitch angle is substantially equal to zero, and wherein a generator torque is varied,
the sub-nominal zone of operation comprises a first operational range, a second operational range and a third operational range, wherein
the first operational range extends from a cut-in wind speed to a first wind speed, wherein a rotor speed is kept substantially constant at a first value,
the second operational range extends from the first wind speed to a second wind speed, wherein both the rotor speed and generator torque are varied as a function of wind speed, and
the third operational range extends from the second wind speed to the nominal wind speed, wherein the rotor speed is kept substantially constant at a second value, and
the supra-nominal zone comprises a fourth operational range in which an aerodynamic torque of the rotor is maintained substantially constant by varying the pitch angle.

**14.** Method according to claim 13, wherein the operational changes include one or more of the following:

   - activation or deactivation of a set point reduction in the supra-nominal zone of operation
   - modifying a parameter setting of a PID rotor speed control in the supra-nominal zone of operation.

**15.** Method according to any of claims 1 - 14, wherein the first wind condition includes an average wind speed and a characteristic indicative of turbulence.

**16.** Method according to any of claims 1 - 15, wherein the reference power spectral density for the selected loads for each of the selected wind turbine components is based on simulations or on measurements during a certification of the wind turbine.

**17.** A wind turbine comprising a tower, a rotor comprising a rotor hub and a plurality of blades, one or more pitch systems for rotating the blades around their longitudinal axes, a generator, and a control system, and wherein the control system is configured to carry out any of the methods according to any of claims 1 - 16.

**Patentansprüche**

**1.** Verfahren zum Betrieb von einer Windturbine, wobei die Windturbine einen oder mehreren Sensoren zur Feststellung von Beanspruchungen in einem oder mehreren ausgewählten Windturbinenbauteilen umfasst,
wobei das Verfahren folgendes umfasst: feststellen von Beanspruchungen in den ausgewählten Windturbinenbauteilen unter einer ersten Windbedingung während eines Messzeitraums,

berechnen von einem tatsächlichen Leistungsdichtespektrum von einer oder mehreren ausgewählten Beanspruchungen für jeden ausgewählten Windturbinenbauteil währen des Messzeitraums,

erhalten von einem Bezugsleistungsdichtespektrum für die ausgewählten Beanspruchungen für jeden ausgewählten Windturbinenbauteil unter einer Windbedingung, die mit der ersten Windbedingung vergleichbar ist,

feststellen der kumulierten Ermüdungsschädigung in zeitäquivalenten Beanspruchungen für jeden ausgewählten Windturbinenbauteil beruhend auf dem tatsächlichen Leistungsdichtespektrum und dem Bezugsleistungsdichtespektrum,

prüfen, für jeden ausgewählten Windturbinenbauteil, ob die kumulierte Ermüdungsschädigung in zeitäquivalenten Belastungen innerhalb annehmbarer Grenzwerte liegt, und

falls das Ergebnis negativ ist

durchführen von einem oder mehreren Betriebsänderungen.

2. Verfahren nach Anspruch 1, wobei das Prüfen, für jeden ausgewählten Windturbinenbauteil, ob die annehmbaren Grenzwerte überschreitet werden, das Prüfen umfasst, ob die kumulierte Ermüdungsschädigung in zeitäquivalenten Beanspruchungen im Wesentlichen der Zeit entspricht, während der die Windturbine in Betrieb gewesen ist.

3. Verfahren nach Anspruch 1 oder 2, wobei das Durchführen von einer oder mehr Betriebsänderungen das Vergleichen der kumulierten Ermüdungsschädigung von mindestens einem der ausgewählten Windturbinenbauteile mit mindestens einem anderen Windturbinenbauteil in den zeitäquivalenten Belastungen, und

das Durchführen von einer oder mehr Betriebsänderungen beruhend mindestens teilweise auf dem Vergleich der kumulierten Ermüdungsschädigung umfasst.

4. Verfahren nach einem der Ansprüche 1 - 3, wobei das Durchführen von einer oder mehreren Betriebsänderungen das Messen von einem Energieertrag während eines Zeitraums und das Vergleichen des gemessenen Energieertrags während des Zeitraums mit einem erwarteten Energieertrag umfasst, und

das Durchführen von einer oder mehreren Betriebsänderungen beruhend mindestens teilweise auf dem Vergleich des gemessenen Energieertrags mit dem erwarteten Energieertrag umfasst.

5. Verfahren nach einem der Ansprüche 1 - 4, wobei Beanspruchungen in den ausgewählten Windturbinenbauteilen im Wesentlichen kontinuierlich gemessen werden.

6. Verfahren nach einem der Ansprüche 1 - 5, wobei der Messzeitraum 1 Minute bis 5 Minuten, wahlweise 1 Minute bis 3 Minuten, und wahlweise ca. 100 Sekunden beträgt.

7. Verfahren nach einem der Ansprüche 1 - 6, wobei die Windturbine einen Turm, einen Rotor umfassend eine Rotornabe und eine Vielzahl von Blättern, ein oder mehr Blattverstellsysteme zur Drehung der Blätter um deren Längsachsen herum, einen Generator,

und wahlweise eine Rotorwelle und ein Getriebe zur betriebsfähigen Kopplung des Generators mit der Nabe umfasst.

8. Verfahren nach Anspruch 7, wobei einer der ausgewählten Windturbinenbauteile der Turm ist, und die ausgewählten Beanspruchungen ein Biegemoment an einer Basis des Turms, wahlweise ein in Längsrichtung auftretendes Biegemoment an der Basis des Turms umfassen.

9. Verfahren nach Anspruch 7 oder 8, wobei einer der ausgewählten Windturbinenbauteile die Rotornabe ist, und die ausgewählten Beanspruchungen ein Nabenbiegemoment umfassen.

10. Verfahren nach einem der Ansprüche 7 - 9, wobei einer der ausgewählten Windturbinenbauteile ein Rotorblatt ist, und die ausgewählten Beanspruchungen ein Schlagbiegemoment und/oder ein Schwenkbiegemoment umfassen.

11. Verfahren nach einem der Ansprüche 7 - 10, wobei die ausgewählten Windturbinenbauteile eines vom Blattverstellsystem und/oder von der Rotorwelle und/oder vom Generator umfassen.

12. Verfahren nach einem der Ansprüche 1 - 11, wobei die Betriebsänderungen eine oder mehr der folgenden umfassen:

- Aktivierung oder Deaktivierung einer individuellen Blattverstellregelung
- Aktivierung oder Deaktivierung einer Blattverstellregelung zur Reduktion der Turmbeanspruchungen
- Aktivierung oder Deaktivierung von einer Leistungsbegrenzung.

**13.** Verfahren nach einem der Ansprüche 1 - 12, weiterhin umfassend:

das Folgen einer Leistungskurve, die einen Betrieb der Windturbine als Funktion von einer Windgeschwindigkeit beschreibt,

wobei die Leistungskurve ein subnominales Betriebsfeld für Windgeschwindigkeiten unterhalb einer Nennwindgeschwindigkeit und ein supranominales Betriebsfeld für Windgeschwindigkeiten oberhalb der Nennwindgeschwindigkeit umfasst, und wobei

im subnominalen Betriebsfeld, der Blattverstellwinkel im Wesentlichen Null beträgt, und wobei ein Generatordrehmoment variiert wird,

das subnominale Betriebsfeld einen ersten Betriebsbereich, einen zweiten Betriebsbereich und einen dritten Betriebsbereich umfasst, wobei

der erste Betriebsbereich von einer Einschaltwindgeschwindigkeit bis zu einer ersten Windgeschwindigkeit reicht, wobei eine Rotordrehzahl im Wesentlichen konstant bei einem ersten Wert gehalten wird,

der zweite Betriebsbereich von der ersten Windgeschwindigkeit bis zu einer zweiten Windgeschwindigkeit reicht, wobei sowohl die Rotordrehzahl als auch das Generatordrehmoment als Funktion der Windgeschwindigkeit variiert werden, und

der dritte Betriebsbereich von der zweiten Windgeschwindigkeit bis zu der Nennwindgeschwindigkeit reicht, wobei die Rotordrehzahl im Wesentlichen konstant bei einem zweiten Wert gehalten wird, und

das supranominale Betriebsfeld einen vierten Betriebsbereich umfasst, in dem ein aerodynamisches Drehmoment des Rotors im Wesentlichen konstant gehalten wird, indem der Blattverstellwinkel variiert wird.

**14.** Verfahren nach Anspruch 13, wobei die Betriebsänderungen eine oder mehr der folgenden umfassen:

- Aktivierung oder Deaktivierung von einer Sollwertreduktion im supranominalen Betriebsfeld
- Modifizierung von einer Parametereinstellung einer PID-Rotordrehzahlregelung im supranominalen Betriebsfeld.

**15.** Verfahren nach einem der Ansprüche 1 - 14, wobei die erste Windbedingung eine durchschnittliche Windgeschwindigkeit und eine auf Turbulenz hinweisende Eigenschaft umfasst.

**16.** Verfahren nach einem der Ansprüche 1 - 15, wobei das Bezugsleistungsdichtespektrum für die tatsächlichen Beanspruchungen für jeden ausgewählten Windturbinenbauteil auf Simulationen oder auf Messungen während einer Zertifizierung der Windturbine beruhen.

**17.** Eine Windturbine umfassend einen Turm, einen Rotor umfassend eine Rotornabe und eine Vielzahl von Blättern, ein oder mehr Blattverstellsysteme zur Drehung der Blätter um deren Längsachsen herum, einen Generator und ein Regelsystem, und wobei

das Regelsystem konfiguriert ist, um eines der Verfahren nach einem der Ansprüche 1 - 16 durchzuführen.

**Revendications**

**1.** Procédé de fonctionnement d'une éolienne, l'éolienne comprenant un ou plus capteurs pour déterminer des charges dans un ou plusieurs composants d'éolienne choisis,

le procédé comprenant déterminer des charges dans les composants d'éolienne choisis sous une première condition du vent pendant une période de mesure,

calculer une densité spectrale de puissance réelle d'une ou plusieurs charges choisies pour chacun des composants d'éolienne choisis pendant la période de mesure,

obtenir une densité spectrale de puissance de référence pour les charges choisies pour chacun des composants d'éolienne choisis sous une condition du vent qui es comparable à la première condition du vent,

déterminer de l'endommagement par fatigue accumulé pour des charges équivalentes en temps pour chacun des composants d'éolienne choisis sur la base de la densité spectrale de puissance réelle et la densité spectrale de puissance de référence,

vérifier pour chacun des composants d'éolienne choisis si l'endommagement par fatigue accumulé pour des charges équivalentes en temps est dans des valeurs limites acceptables, et

en cas de résultat négatif

réaliser un ou plusieurs changements opérationnels.

**2.** Procédé selon la revendication 1, dans lequel la vérification pour chacun des composants d'éolienne choisis si des valeurs limites acceptables sont dépassées comprend vérifier si l'endommagement par fatigue accumulé pour des charges équivalentes en temps correspond essentiellement au temps pendant lequel l'éolienne a été en fonctionnement.

**3.** Procédé selon la revendication 1 ou 2, dans lequel la réalisation d'un ou de plusieurs changements opérationnels inclut comparer l'endommagement par fatigue accumulé pour des charges équivalentes en temps d'au moins un des composants d'éolienne choisis avec au moins un autre composant d'éolienne, et
réaliser un ou plusieurs changements opérationnels sur la base, au moins en partie, de la comparaison de l'endommagement par fatigue accumulé.

**4.** Procédé selon l'une quelconque des revendications 1 - 3, dans lequel la réalisation d'un ou plusieurs changements opérationnels inclut mesurer un rendement énergétique pendant une période de temps, et comparer le rendement énergétique mesuré pendant la période de temps avec un rendement énergétique attendu, et
réaliser un ou plusieurs changements opérationnels sur la base, au moins en partie, de la comparaison du rendement énergétique mesuré avec le rendement énergétique attendu.

**5.** Procédé selon l'une quelconque des revendications 1 - 4, dans lequel des charges dans les composants d'éolienne choisis sont mesurées essentiellement de façon continuelle.

**6.** Procédé selon l'une quelconque des revendications 1 - 5, dans lequel la période de mesure est de 1 minute à 5 minutes, facultativement de 1 minute à 3 minutes, et facultativement d'environ 100 secondes.

**7.** Procédé selon l'une quelconque des revendications 1 - 6, dans lequel l'éolienne comprend une tour, un rotor comprenant un moyeu de rotor et une pluralité de pales, un ou plus systèmes de réglage de pas de pale pour faire pivoter les pales autour de leurs axes longitudinaux, un générateur,
et facultativement un arbre de rotor et une boîte de vitesses pour coupler de façon opérationnelle le générateur au moyeu.

**8.** Procédé selon la revendication 7, dans lequel un des composants d'éolienne choisis est la tour, et les charges choisies comprennent un moment de flexion à une base de la tour, facultativement un moment de flexion longitudinale à la base de la tour.

**9.** Procédé selon la revendication 7 ou 8, dans lequel un des composants d'éolienne choisis est le moyeu du rotor, et les charges choisies comprennent un moment de flexion du moyeu.

**10.** Procédé selon l'une quelconque des revendications 7 - 9, dans lequel un des composants d'éolienne choisis est une pale du rotor, et les charges choisies comprennent un moment de flexion dans la direction de battement et/ou un moment de flexion dans la direction de la corde.

**11.** Procédé selon l'une quelconque des revendications 7 - 10, dans lequel les composants d'éolienne choisis comprennent un des systèmes de réglage de pas de pale et/ou l'arbre du rotor et/ou le générateur.

**12.** Procédé selon l'une quelconque des revendications 1 - 11, dans lequel les changements opérationnels incluent un ou plus des suivants :

- activation ou désactivation du réglage de pas de pale individuel
- activation ou désactivation d'un réglage de pas de pale pour réduire des charges de la tour
- activation or désactivation d'une limitation de puissance.

**13.** Procédé selon l'une quelconque des revendications 1 - 12, comprenant en outre :

suivre une courbe de puissance décrivant un fonctionnement de l'éolienne comme fonction d'une vitesse du vent, comprenant la courbe de puissance une région subnominale de fonctionnement pour des vitesses du vent au-dessous d'une vitesse nominale du vent et une région supranominale de fonctionnement pour des vitesses du vent au-dessus de la vitesse nominale du vent, et dans lequel
dans la région subnominale de fonctionnement, l'angle de pas de pale est essentiellement égal à zéro, et dans lequel un moment de générateur est varié,

la région subnominale de fonctionnement comprend une première plage de fonctionnement, une deuxième plage de fonctionnement et une troisième plage de fonctionnement, dans lequel

la première plage de fonctionnement s'étend d'une vitesse de démarrage jusqu'à une première vitesse du vent, dans lequel une vitesse du rotor est maintenue essentiellement constante à une première valeur,

la deuxième plage de fonctionnement s'étend de la première vitesse du vent jusqu'à une deuxième vitesse du vent, dans lequel tant la vitesse du rotor que le moment du générateur sont variés en fonction de la vitesse du vent, et

la troisième plage de fonctionnement s'étend de la deuxième vitesse du vent jusqu'à la vitesse nominale du vent, dans lequel la vitesse du rotor est maintenue essentiellement constante dans une deuxième valeur, et

la région supranominale comprend une quatrième plage de fonctionnement dans laquelle un moment aérodynamique du rotor est maintenu essentiellement constant en variant l'angle de pas de pale.

14. Procédé selon la revendication 13, dans lequel les changements opérationnels incluent un ou plus des suivants :

- activation ou désactivation d'une réduction de la valeur de consigne dans la région supranominale de fonctionnement
- modification d'un ajustement de paramètres d'un réglage PID de la vitesse du rotor dans la région supranominale de fonctionnement.

15. Procédé selon l'une quelconque des revendications 1 - 14, dans lequel la première condition du vent inclut une vitesse du vent moyenne et une caractéristique indicative de turbulence.

16. Procédé selon l'une quelconque des revendications 1 - 15, dans lequel la densité spectrale de puissance de référence pour les charges choisies pour chacun des composants d'éolienne choisis est basée sur des simulations ou sur des mesures réalisées pendant une certification de l'éolienne.

17. Une éolienne comprenant une tour, un rotor comprenant un moyeu de rotor et une pluralité de pales, un ou plus systèmes de réglage de pas de pale pour faire pivoter les pales autour de leurs axes longitudinaux, un générateur, et un système de réglage, et dans laquelle

le système de réglage est configuré pour réaliser l'un quelconque des procédés selon l'une quelconque des revendications 1 - 16.

Fig. 1

Measuring loads in selected wind turbine components — 10

Calculating PSD — 20

Obtaining reference PSD — 30

Determine accumulated fatigue damage — 40

Performing an operational change — 50

Fig. 2

Fig. 3a

Fatigue control module 120

START
(WT Sensor)

Time
Domain
Data

Compute Power
Spectral Density

PSD

Reference
PSD (Model)

Frequency
Based Fatigue
Calculation

% DEL
Difference

Compute Extra
Control Output

Switch-on Control
Strategy?

Pitch/
Torque
Extra Gain

Flag ON/
OFF
Strategy
(e.g. IPC)

END
(Baseline
Controller)

Fig. 3b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A fatigue approach to wind turbine control. **HAMMERUN et al.** Journal of Physics: Conference series. IOP Publishing, July 2007, vol. 75

- **C. LALANNE.** Mechanical vibration and shock. Taylor and Francis, 2002
- **T. DIRLIK.** Application of computers in fatigue analysis. University of Warwick, 1985